# EUROPÄISCHE PATENTSCHRIFT

(11) **EP 1 758 958 B1**
(45) Veröffentlichungstag und Bekanntmachung des Hinweises auf die Patenterteilung: **23.04.2008**
(21) Anmeldenummer: 05747776.2
(22) Anmeldetag: 06.05.2005
(51) Int. Cl.: C09C 1/40, G03G 9/097, C01F 7/00, C09D 5/03

(54) **HYDROPHOBIERTE SALZE SCHICHTARTIGER METALLHYDROXIDE**
HYDROPHOBIC SALTS OF LAYERED METAL HYDROXIDES
SELS HYDROPHOBES D'HYDROXYDES METALLIQUES EN COUCHES

(30) Priorität: 11.06.2004 DE 102004028493
(43) Veröffentlichungstag der Anmeldung: 07.03.2007
(73) Patentinhaber: Clariant Produkte (Deutschland) GmbH, 65929 Frankfurt am Main (DE)
(72) Erfinder: MICHEL, Eduard, 79418 Schliengen (DE)
(74) Vertreter: Hütter, Klaus
(86) Internationale Anmeldenummer: PCT/EP2005/004915
(87) Internationale Veröffentlichungsnummer: WO 2005/121258

(56) Entgegenhaltungen:
- WO-A-20/04019137
- US-A- 3 607 337
- US-A- 5 482 806

## Beschreibung

Die vorliegende Erfindung liegt auf dem Gebiet der Ladungssteuermittel im Sinne einer Komponente, die das elektrostatische Aufladungsverhalten in einer Matrix selektiv beeinflusst.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponentenentwickler genannt), darüber hinaus sind noch Spezialtoner, wie z.B. Magnettoner, Flüssigtoner oder Polymerisationstoner im Einsatz. Unter Polymerisationstonern sind solche Toner zu verstehen, die z. B. durch Suspensionspolymerisation (Kondensation) oder Emulsionspolymerisation entstehen und zu verbesserten Teilcheneigenschaften des Toners führen. Weiterhin sind auch solche Toner gemeint, die in nicht-wässrigen Dispersionen erzeugt werden.

Ein Maß für die Tonerqualität ist seine spezifische Aufladung q/m (Ladung pro Masseeinheit). Neben Vorzeichen und Höhe der elektrostatischen Aufladung ist das schnelle Erreichen der gewünschten Ladungshöhe, die Konstanz dieser Ladung über einen längeren Aktivierzeitraum sowie die Unempfindlichkeit des Toners gegen Klimaeinflüsse, wie Temperatur und Luftfeuchtigkeit, ein wichtiges Qualitätskriterium.
Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt.

Da Tonerbindemittel oftmals eine starke Abhängigkeit der Aufladung von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen. Darüber hinaus ist für die Praxis wichtig, dass die Ladungssteuermittel eine ausreichende Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100°C und 200°C. Dementsprechend ist eine Thermostabilität von 200°C von großem Vorteil. Wichtig ist auch, dass die Thermostabilität über einen längeren Zeitraum (ca. 30 Minuten) und in verschiedenen Bindemittelsystemen gewährleistet ist.

Für eine gute Dispergierbarkeit ist es von Vorteil, wenn das Ladungssteuermittel keine wachsartigen Eigenschaften, keine Klebrigkeit und einen Schmelz- oder Erweichungspunkt von > 150°C, besser > 200°C, aufweist. Klebrigkeit führt häufig zu Problemen beim Zudosieren in die Tonerformulierung, und niedrige Schmelz- oder Erweichungspunkte können dazu führen, dass beim Eindispergieren keine homogene Verteilung erreicht wird, da sich das Material tröpfchenförmig im Trägermaterial zusammenschließt.

Typische Tonerbindemittel sind Polymerisations-, Polyadditions- und Polykondensationsharze wie Styrol-, Styrolacrylat-, Styrolbutadien-, Acrylat-, Polyester-, Phenol-Epoxidharze, sowie Cycloolefincopolymere, einzeln oder in Kombination, die noch weitere Inhaltsstoffe, z.B. Farbmittel, wie Farbstoffe und Pigmente, Wachse oder Fließhilfsmittel, enthalten können oder im Nachhinein zugesetzt bekommen können, wie hochdisperse Kieselsäuren.

Ladungssteuermittel können auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden.
Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Darüber hinaus ist gefunden worden, dass Ladungssteuermittel das Aufladungssowie das Ladungsstabilitätsverhalten von Elektretmaterialien, insbesondere Elektretfasern, erheblich verbessern können (DE-A-43 21 289). Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur Feinst-Staubfiltration eingesetzt werden. Die Elektretmaterialien können ihre Ladung durch Corona- oder Triboaufladung erhalten.

Weiterhin können Ladungssteuermittel in elektrostatischen Trennvorgängen, insbesondere in Trennvorgängen von Polymeren verwendet werden. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel ist auch eine Einarbeitung derselben in das Polymer möglich, um beispielsweise ein Polymer innerhalb der triboelektrischen Spannungsreihe zu verschieben und eine entsprechende Trennwirkung zu erhalten. Ebenso lassen sich auf diese Weise andere Polymere wie z. B. Polypropylen (PP) und/oder Polyethylenterephthalat (PET) und/oder Polyvinylchlorid (PVC) voneinander trennen.

Auch Salzmineralien lassen sich trennen, wenn ihnen zuvor ein Mittel zugegeben wurde (Oberflächenkonditionierung), das die substratspezifische elektrostatische Aufladung verbessert.
Weiterhin werden Ladungssteuermittel als "Electroconductivity Providing Agents" (ECPA) in Tinten für Tintenstrahldrucker sowie für "electronic inks" oder "electronic paper" eingesetzt.

In der US-A-5,288,581 werden bestimmte Hydrotalcite als ladungssteuernde Additive eingesetzt.
In JP 10-090 941 wird die Verwendung eines mittels Fettsäuren hydrophobisierten Hydrotalcits als externes Additiv in Kombination mit einem positiven Ladungssteuermittel beschrieben. Dabei dient das Additiv zur Verbesserung der Rieselfähigkeit des Toners.
In der WO 2004/019 137 A1 werden Salze schichtartiger Doppelhydroxide als Ladungssteuermittel verwendet.

Aufgabe der vorliegenden Erfindung war es, wirksame und ökotoxikologisch verträgliche Ladungssteuermittel zu finden, die eine hohe Schnellaufladung und hohe Ladungsstabilität aufweisen, sowie darüber hinaus eine nur geringe Empfindlichkeit gegenüber unterschiedlichen Luftfeuchtebedingungen, insbesondere hohen Luftfeuchten, zeigen. Weiterhin sollten sie in verschiedenen praxisnahen Tonerbindemitteln wie Polyestern, Polystyrolacrylaten oder Polystyrolbutadienen/Epoxidharzen sowie Cycloolefincopolymeren sehr gut und unzersetzt dispergierbar sein. Weiterhin sollte ihre Wirkung weitgehend unabhängig von der Harz/Carrier-Kombination sein, um eine breite Anwendung zu erschließen. Ebenso sollten sie in gängigen Pulverlack-Bindemitteln und Elektretmaterialien wie z.B. Polyester (PES), Epoxid, PES-Epoxyhybrid, Polyurethan, Acrylsystemen sowie Polypropylenen gut und unzersetzt dispergierbar sein.

Bezüglich ihrer elektrostatischen Effizienz sollten die Ladungssteuermittel bereits bei möglichst geringer Konzentration (1 % oder kleiner) wirksam sein und diese Effizienz in Verbindung mit Ruß oder anderen Farbmitteln nicht verlieren. Von Farbmitteln ist bekannt, dass sie die triboelektrische Aufladung von Tonern teilweise nachhaltig beeinflussen können.
Überraschenderweise hat sich nun gezeigt, dass nachstehend beschriebene hydrophobierte Salze schichtartiger Metallhydroxide die vorstehenden Anforderungen erfüllen.

Gegenstand der vorliegenden Erfindung ist daher ein hydrophobiertes Salz eines schichtartigen Metallhydroxids, das dadurch erhältlich ist, indem man einem schichtartigen Metallhydroxid-Salz, welches dreiwertige, zweiwertige und gegebenenfalls einwertige Metallkationen, und ein oder mehrere organische Anionen A der Formel (I) enthält

X-R-Y (I),

worin
- X: Wasserstoff, Hydroxy, Carboxy, Sulfato oder Sulfo;
- Y: Carboxy, Sulfato oder Sulfo, und
- R: ein aliphatischer, cycloaliphatischer, heterocycloaliphatischer, olefinischer, cycloolefinischer, heterocycloolefinischer, aromatischer, heteroaromatischer, araliphatischer oder heteroaraliphatischer Rest mit 2 bis 50 C-Atomen, insbesondere 2 bis 44 C-Atomen, besonders bevorzugt 2 bis 32 C-Atomen, bedeutet, worin ein oder mehrere, bevorzugt 1, 2, 3 oder 4, Substituenten aus der Gruppe Hydroxy, Amino, Halogen, C₁-C₂₂-Alkyl, C₁-C₂₂-Alkoxy, C₁-C₂₂-Alkylen-(CO)-O-(CH₂CH₂O)₀₋₅₀-Alkyl, C₁-C₂₂-Alkylen-(CO)-O-(CH₂CH₂O)₀₋₅₀-Halogenalkyl, Carboxy, Sulfo, Nitro oder Cyano enthalten sein können,
in Dispersion unter intensiver Durchmischung eine oder mehrere hydrophobe Verbindungen aus der Gruppe der Wachse und Metallseifen in einer Menge von 0,2 bis 200 Gew.-%, beispielsweise 1 bis 200 Gew.-%, vorzugsweise 1,5 bis 150 Gew.-%, besonders bevorzugt 2 bis 100 Gew.-%, bezogen auf das Metallhydroxidsalz, zusetzt, und gegebenenfalls das flüssige Medium entfernt, trocknet und als Pulver isoliert.

Die erfindungsgemäßen Salze sind dadurch gekennzeichnet, dass das Metallhydroxid ein Mehrfachhydroxid ist, wobei das molare Verhältnis der zweiwertigen Metallkationen zu den dreiwertigen Metallkationen zwischen 1000 und 0,001, insbesondere zwischen 100 und 0,01, liegt und das Hydroxid auch in einer durch Wasserabspaltung getrockneten oder calcinierten Form als gemischtes Oxid-Hydroxid oder als Oxid vorliegen kann.
Die erfindungsgemäßen Salze können auch Wassermoleküle als Kristallwasser oder eingelagert zwischen einzelnen Schichten enthalten, sowie aus hydrothermal hergestellten und erfindungsgemäß behandelten Formen der Metallhydroxid/oxide bestehen.
Als einwertige Metallionen kommen insbesondere Li⁺, Na⁺, K⁺, Rb⁺, Cs⁺, Cu⁺ oder Ag⁺ in Betracht.
Als zweiwertige Metallkationen kommen insbesondere Mg²⁺, Ca²⁺, Sr²⁺, Ba²⁺, Zn²⁺, Co²⁺, Ni²⁺, Fe²⁺, Cu²⁺ oder Mn²⁺ in Betracht.
Als dreiwertige Metallkationen kommen insbesondere Al³⁺, Fe³⁺, Co³⁺, Mn³⁺, Cr³⁺, Sc³⁺, sowie B³⁺ in Betracht.
Besonders bevorzugt sind Doppelhydroxid-Salze, die Mg²⁺ und Al³⁺ enthalten, insbesondere im molaren Verhältnis 100:1 bis 1:100.

Das schichtartige Metallhydroxidsalz entspricht vorzugsweise der Formel (2)

[M(I)_{y1}M(II)_{y2}M(III)ₓ(OH)₂]A_{(x/z)·}nH₂O (2)

worin gilt:
0<x<1;
0<y₂<1 und y₂ ≤ (1-x);
y₁=2-2x-2y₂;
z ist die negative Ladung eines Anions A oder die mittlere negative Ladung bei mehreren Anionen,
n eine Zahl von 0 bis 20 ist,
M(I) ein oder mehrere einwertige Metallkationen darstellt,
M(II) ein oder mehrere zweiwertige Metallkationen darstellt,
M(III) ein oder mehrere dreiwertige Metallkationen darstellt, und
A wie vorstehend definiert ist.

A kann ein einfach oder mehrfach geladenes organisches Anion der Formel (I) sein. Die Menge der Anionen A wird durch die Stöchiometrie der positiven und negativen Ladungen im Hydroxid/Oxid-Salz so bestimmt, dass die Summe aller Ladungen Null ergibt. Es ist auch möglich, dass ein Teil, beispielsweise 5 bis 95 Mol-%, vorzugsweise 10 bis 90 Mol-%, insbesondere 20 bis 80 Mol-%, der Anionen der Formel (I) durch andere Anionen, wie z.B. anorganische Anionen, wie Halogenid, Hydrogencarbonat, Carbonat, Sulfat, Nitrat, Phosphat, oder Borat oder Acetat, ersetzt ist.
Als organische Anionen A kommen vorzugsweise solche aus der Gruppe der Benzilsäure, Salicylsäure, Benzoesäure, Naphthalindisulfonsäuren, z.B. Naphthalin-1,5-disulfonsäure, Naphthalindicarbonsäuren, Hydroxynaphthoesäuren, z.B. 1-Hydroxy-2-naphthoesäure, 2-Hydroxy-1-naphthoesäure, 3-Hydroxy-2-naphthoesäure, Milchsäure, Stearinsäure, Arachinsäure, Behensäure, Erucasäure, Octandicarbonsäure, Decandicarbonsäure (Sebacinsäure), Dodecandicarbonsäure, Tetradecandicarbonsäure, Hexadecandicarbonsäure, Octadecandicarbonsäure, Naphthalintetracarbonsäure, Sulfobernsteinsäure-(C₆-C₂₀)-Alkylmonoester, Sulfobernsteinsäure-(C₆-C₂₂)-Fluoralkylmonoester, in Betracht.

Im Sinne der vorliegenden Erfindung kommen als Wachse Säurewachse, beispielsweise Montansäurewachse oder teilveresterte oder teilverseifte Montansäurewachse, Esterwachse, beispielsweise Hydroxystearinsäureesterwachse, Montansäureesterwachse oder teilhydrolisierte Montansäureesterwachse, Amidwachse, beispielsweise C₁₈-C₄₄-Fettsäureamidwachse, Carnaubawachse, Polyolefinwachse, beispielsweise Polyethylen- oder Polypropylenwachse, Polyolefinabbauwachse, oxidierte PE-, PP- oder Paraffin-Wachse, durch Pfropfung mit weiteren Monomeren, wie beispielsweise Silanen, Acrylsäurederivaten, Methacrylsäurederivaten, Maleinsäureanhydrid oder Styrol, modifizierte PP-Wachse, Polyolefin-Metallocenwachse sowie Paraffinwachse in Betracht.
Kennzeichnend für die besagten Wachse ist ein relativ scharfer Schmelz- bzw. Tropfpunkt von 40-200°C, oberhalb des Tropfpunktes eine relativ niedrigviskose Konsistenz mit Viskositäten in einem Bereich von 5-5000 mPas, eine grob bis feinkristalline Struktur, ein Molekulargewicht von 250-20000 g/mol (Zahlenmittel Mₙ), Polierbarkeit unter leichtem Druck, relativ niedrige Säurezahlen von 0-200 mg KOH/g, sowie eine äußerst niedrige Wasserlöslichkeit, auch oberhalb des Tropf- bzw. Schmelzpunktes und gleichzeitig alkalischen pH-Bedingungen.

Metallseifen sind Salze von höherwertigen, d.h. zwei-, drei- oder vierwertigen Metallionen mit einer Säurekomponente aus der Gruppe der gesättigten oder ungesättigten, linearen oder verzweigten C₇-C₄₃-Carbonsäuren, C₈-C₄₄-Sulfonate, C₈-C₄₄-Sulfate, C₈-C₄₄-Alkylethersulfate, C₈-C₄₄-Alkylamidoethersulfate, C₈-C₄₄-Aralkylsulfonate (wobei Aryl C₆-C₁₂ und Alkyl C₁-C₃₂ bedeuten), C₈-C₄₄-Alkylethersulfosuccinate, C₈-C₄₄-N-Alkylsulfosuccinamate, C₈-C₄₄-Acylglutamate, C₈-C₄₄-Fettsäureisethionate, C₈-C₄₄-Fettsäuremethyltauride, C₈-C₄₄-Fettsäuresarcoside, C₈-C₄₄-Phosphate, Säurewachse, teilveresterten Säurewachse, teilhydrolysierten Esterwachse oder oxidierten PE- oder Paraffin-Wachse, insbesondere Al-, Ba-, Sr-, Ca-, Fe-, Co-, Cu-, Mg-, Mn-, Ni-, Pb-, ZrO-, TiO- und Zn-Stearate, -Behenate, -Erucate, -Palmitate, -Oleate, -Linoleate, -Resinate, -Laurate, -Myristate, -Naphthenate, -Tallate, -Dodecylsulfate, -sekundären Alkylsulfonate, -Dodecylbenzolsulfonate und N-(1,2-Dicarboxyethyl)-N-Octadecylsulfosuccinamate.
Bevorzugt sind hydrophobierte Doppelhydroxid-Salze mit einem molaren Verhältnis Mg:Al von 1000:1 bis 1:1000, mit 0,1 bis 30 Gew.-% Sebacinsäure und/oder 0,1 bis 75 Gew.-% Stearinsäure als organischem Anion, und 0,5 bis 150 Gew.-%, beispielsweise 1 bis 150 Gew.-%, jeweils bezogen auf das Gesamtgewicht des Mg-Al-Doppelhydroxid-Salzes, Montansäurewachsen, teilveresterten Montansäurewachsen, Hydroxistearinsäureesterwachsen, Erucasäureamidwachsen, Behensäureamidwachsen, Carnaubawachsen, Montansäureesterwachsen, teilhydrolisierten Montansäureesterwachsen, oxidierten oder durch Pfropfung polar gemachten Polyolefinwachsen, oxidierten Paraffinwachsen oder zwei und dreiwertigen Metallsalzen, insbesondere Zn-, Pb-, Sn-, TiO-, ZrO-, Mg-, Ca-, Sr-, Ba-, Al-Salzen von gesättigten oder ungesättigten, linearen oder verzweigten C₇-C₄₃-Carbonsäuren, C₈-C₄₄-Sulfonaten, C₈-C₄₄-Sulfaten, C₈-C₄₄-Alkylethersulfaten, C₈-C₄₄-Alkylamidoethersulfaten, C₈-C₄₄-Aralkylsulfonaten (wobei Aryl C₆-C₁₂ und Alkyl C₁-C₃₂ bedeuten), C₈-C₄₄-Alkylethersulfosuccinaten, C₈-C₄₄-N-Alkylsulfosuccinamaten, C₈-C₄₄-Acylglutamaten, C₈-C₄₄-Fettsäureisethionaten, C₈-C₄₄-Fettsäuremethyltauriden, C₈-C₄₄-Fettsäuresarcosiden, C₈-C₄₄-Phosphaten, Säurewachsen, teilveresterten Säurewachsen, teilhydrolysierten Esterwachsen oder oxidierten PE- oder ParaffinWachsen als hydrophober Verbindung.
Von besonderem Interesse sind hydrophobierte schichtartige Magnesium-Aluminium-Doppelhydroxid-Carbonate mit 0,1 bis 4 Gew.-% Carbonat, mit einem molaren Verhältnis von Mg zu Al von 5:1 bis 1:5, gegebenenfalls in der hydrothermalen oder calcinierten Form, welche 0,1 bis 20 Gew.-% Mono- oder Di-Anionen der Sebacinsäure, und/oder 0,1 bis zu 50 Gew.-% Stearinsäure, sowie 1 bis 100 Gew.-%, beispielsweise 2 bis 100 Gew.-%, jeweils bezogen auf das Gesamtgewicht des Mg-Al-Doppelhydroxid-Carbonats, eines oder mehrerer Wachse aus der Gruppe der Montansäurewachse, Montansäureesterwachse, teilhydrolysierten Montansäureesterwachse, Hydroxystearinsäureesterwachse, Erucasäureamidwachse, Behensäureamidwachse, Carnaubawachse, oxidierten oder gepfropften Polyolefinwachse, oxidierten Paraffinwachsen oder der zwei- oder dreiwertigen Metallsalze von gesättigten oder ungesättigten, linearen oder verzweigten C₇-C₄₃-Carbonsäuren, C₈-C₄₄-Sulfonaten, C₈-C₄₄-Sulfaten, C₈-C₄₄-Alkylethersulfaten, C₈-C₄₄-Alkylamidoethersulfaten, C₇-C₄₄-Aralkylsulfonaten (wobei Aryl C₆-C₁₂ und Alkyl C₁-C₃₂ bedeuten), C₈-C₄₄-Alkylethersulfosuccinaten, C₈-C₄₄-N-Alkylsulfosuccinamaten,C₈-C₄₄-Acylglutamaten, C₈-C₄₄-Fettsäureisethionaten, C₈-C₄₄-Fettsäuremethyltauriden, C₈-C-Fettsäuresarcosiden, C₈-C₄₄-Phosphaten, insbesondere Mg-, Ca-, Zn-, Al-, ZrO-Salze der Stearinsäure, Arachinsäure, Palmitinsäure, Myristinsäure, Laurinsäure, Behensäure, Erucasäure, Dodecylsulfat, sekundären C₁₀-C₂₀-Alkylsulfonaten, Dodecylbenzolsulfonat oder N-(1,2-Dicarboxyethyl)-N-Octadecylsulfosuccinamat, enthalten.

Die schichtartigen Metallhydroxid-Salze selbst als auch die erfindungsgemäß beschriebenen Verbindungen können hergestellt werden durch direkte Umsetzung von calcinierten, uncalcinierten oder hydrothermal hergestellten Metallhydroxiden/oxiden mit den entsprechenden organischen Säuren oder deren Salzen gemäß Formel (I) sowie mit den Wachsen oder Metallseifen unter Erwärmung in einem Mischaggregat, wie beispielsweise einem Kneter, Extruder, Dissolver, einer Perlmühle, einem Henschel-Mischer oder einer Mühle.
Ferner ist die Herstellung der schichtartigen Metallhydroxid-Salze selbst auch möglich durch die Reaktion von Salzen der Metallhydroxid/oxid -aufbauenden Metallkationen, wie beispielsweise Magnesiumchlorid und Aluminiumchlorid, in wässriger alkalischer Lösung unter gleichzeitiger Anwesenheit der Säure oder dem Salz mindestens eines der organischen Anionen A und gegebenenfalls anschließendem Zwischenisolierschritt.

Ausgangsprodukte für Salze der Metallhydroxide/oxide im Sinne der vorliegenden Erfindung sind beispielsweise Hydrotalcite, die meist kommerziell erhältlich sind und ein anorganisches Anion, meist Carbonat, enthalten. Hydrotalcite als solche sind beispielsweise in der DE-A-40 10 606 und in der DE-A-40 34 305 beschrieben.

Es ist bekannt, dem Bindemittel eines elektrophotographischen Toners größere Mengen an Wachs zuzusetzen, beispielsweise 3 bis 5 Gew.-%, bezogen auf das Gewicht des Bindemittels, um beispielsweise den Toner beim Photokopierprozess leichter vom Photoleiter ("cold anti-offset") oder den Fixierrollen ("hot anti-offset") abzutrennen oder auch um den Glasübergangspunkt des polymeren Bindemittels zu erniedrigen. Durch den externen Zusatz von Wachs wird jedoch die erfindungsgemäße Aufgabe nicht gelöst. Nur durch die erfindungsgemäße Behandlung des schichtartigen Metallhydroxid-Salzes gelingt eine Hydrophobierung des Ladungssteuermittels in der Weise, dass die gewünschten Ladungssteuereigenschaften erreicht und gegen Umwelteinflüsse, insbesondere gegen höhere Luftfeuchtigkeit, unempfindlich gemacht werden.
Es wird vermutet, dass die hydrophobe Verbindung, also das Wachs oder die Metallseife, zwischen den organischen Ionen des Metallhydroxids eingebettet und/oder auf der Oberfläche des schichtartigen Metallhydroxid-Salzes adsorbiert ist.

Gegenstand der Erfindung ist auch ein Verfahren zur Herstellung der hydrophobierten schichtartigen Metallhydroxid-Salze, indem man einem schichtartigen Metallhydroxid-Salz, welches dreiwertige, zweiwertige und gegebenenfalls einwertige Metallkationen und ein oder mehrere organische Anionen A der Formel (I), wie vorstehend beschrieben, enthält, in wässriger, wässrig-organischer oder organischer Dispersion unter intensiver Durchmischung eine oder mehrere hydrophobe Verbindungen aus der Gruppe der Wachse und Metallseifen, in einer Menge von 0,2 bis 200 Gew.-%, beispielsweise 1 bis 200 Gew.-%, vorzugsweise 1,5 bis 150 Gew.-%, besonders bevorzugt 2 bis 100 Gew.-%, insbesondere 3 bis 75 Gew.-%, bezogen auf das Metallhydroxidsalz, zusetzt, und gegebenenfalls das flüssige Medium entfernt, trocknet und als Pulver isoliert.

Die hydrophobe Verbindung kann auch vor und/oder während der Umsetzung des schichtartigen Metallhydroxids mit dem oder den organischen Anionen A zugegeben werden.

Gegenstand der Erfindung ist auch ein Verfahren zur Herstellung der hydrophobierten schichtartigen Metallhydroxid-Salze, indem man ein schichtartiges Metallhydroxid, welches dreiwertige, zweiwertige und gegebenenfalls einwertige Metallkationen enthält, in Gegenwart von 0,2 bis 200 Gew.-%, beispielsweise 1 bis 200 Gew.-%, vorzugsweise 1,5 bis 150 Gew.-%, besonders bevorzugt 2 bis 100 Gew.-%, insbesondere 3 bis 75 Gew.-%, bezogen auf das Metallhydroxidsalz, einer oder mehrerer hydrophober Verbindungen aus der Gruppe der Wachse und Metallseifen, in wässriger, wässrig-organischer oder organischer Dispersion unter intensiver Durchmischung mit einem oder mehreren organischen Anionen A der Formel (I), wie vorstehend beschrieben, umsetzt, und gegebenenfalls das flüssige Medium entfernt, trocknet und als Pulver isoliert.

Die Salze schichtartiger Metallhydroxide/oxide werden vorzugsweise in wässrigem Medium in einem pH-Wert von 0 bis 14 und bei einer Temperatur zwischen 0 und 190°C, vorzugsweise unter Rührung und gegebenenfalls auch unter Druck hergestellt. Gegebenenfalls kann die Herstellung auch unter Autoklav-Bedingungen erfolgen, sowie bei Temperaturen zwischen 5 und 200°C, vorzugsweise zwischen 20 und 190°C, insbesondere zwischen 30 und 180°C. Die Herstellung kann auch in organischen Lösungsmitteln, wie beispielsweise Alkoholen, Estern, Ethern oder Ketonen, unter den beschriebenen Bedingungen erfolgen, sowie in Mischungen aus Wasser und einem oder mehreren organischen Lösungsmitteln in beliebigem Verhältnis.
Die organischen Anionen können dabei als Salz, z.B. als Natrium- oder Kaliumsalz, oder als Säure, in festem Zustand, beispielsweise als Pulver oder Granulat, in geschmolzener oder gelöster Form, beispielsweise in wässriger Lösung eingesetzt werden. Ferner können die organischen Anionen A auch als Säurehalogenide, beispielsweise als Säurechloride, als Säureanhydride, als Säureazide oder Säureester eingesetzt werden. Dies gilt insbesondere für die Herstellung in organischen Lösungsmitteln.

Vorzugsweise wird die hydrophobe Verbindung in einem organischen Lösemittel gelöst und als Lösung bei einer Temperatur zwischen 20 bis 200°C zugesetzt, oder die hydrophobe Verbindung wird als wässrige Dispersion bei einer Temperatur zwischen 20 und 200°C zugesetzt. Auch hier können die wässrigen Dispersionen Anteile (bis zu 40 Gew.-%) an organischem Lösemittel, z.B. Alkohol, enthalten.
Es ist auch möglich, die hydrophobe Verbindung als Pulver oder langsam in geschmolzener Form, beispielsweise in einem feinen Strahl innerhalb von mindestens 1 Minute, zweckmäßig bei einer Temperatur zwischen 20 und 200°C, zuzudosieren.
Die Zugabe der hydrophoben Verbindung erfolgt unter intensiver Durchmischung mit der Dispersion des Metallhydroxids, beispielsweise unter intensivem Rühren mit geeigneten Rühraggregaten, wie Ultraturrax oder Propellerrührer, einer Perlmühle, oder auch mit Hilfe von Ultraschall.
Es ist zweckmäßig, für den Einsatz der hydrophoben Verbindung in Dispersion oder Lösung ein oder mehrere anionische, kationische, zwitterionische oder nichtionische niedermolekulare oder polymere Dispergierhilfsmittel zu verwenden, wie beispielsweise Diethylaminoethanol (DEAE), Alkylamine, Alkylsulfate, Alkylsulfonate, Alkylphosphate, Betaine, Sulfobetaine, Poly(vinylalkohol-co-vinylacetat-co-vinylacetal) in verschiedenster Monomerzusammensetzung, Poly(styrol-co-acrylsäure), gesättigte oder ungesättigte Fettsäuren, Alkyl- oder Alkenyl-poly(glykolether), Fettalkohol-poly(glykolether) oder Fettalkoholpoly(glykolether-block-propylenglykolether), wobei nichtionische Dispergierhilfsmittel bevorzugt sind.
Der Anteil des oder der Dispergierhilfsmittel in einer Dispersion oder Lösung der hydrophoben Verbindung kann 0,1 bis 500 Gew.-%, vorzugsweise 0,1 bis 50 Gew.-%, bezogen auf die Menge der hydrophoben Verbindung, betragen.
Die mittlere Partikelgröße (d₅₀-Wert) in der Dispersion der hydrophoben Verbindung liegt unter 500 µm, vorzugsweise unter 1 µm, besonders bevorzugt unter 500 nm.

Bei Verwendung von Metallseifen werden diese vorzugsweise unmittelbar vor der Zugabe zu den Metallhydroxiden durch Fällung hergestellt oder aber erst nach Zugabe zu den schichtartigen Metallhydroxidsalzen durch Fällung in der Reaktionsmischung erzeugt. Hierbei wird die Säurekomponente, z.B. Stearinsäure, in Wasser, in einer Wasser-Lösemittel-Mischung oder in der Reaktionsmischung, unter Wärmeeinfluss, gegebenenfalls auch über dem Schmelzpunkt dieser Komponente, und Zugabe von Lauge, wie beispielsweise festem oder wässrigem Natriumhydroxid, sowie gegebenenfalls eines oder mehrerer der zuvor beschriebenen Dispergierhilfsmittel, gelöst und anschließend durch Zugabe einer wässrigen Lösung des Metallsalzes, wie beispielsweise einer Zinksulfat-, Zinkchlorid-, Zinkhydroxid-, Aluminiumchlorid-, Aluminiumsulfat-, Aluminiumhydroxid- oder Zirkonylchlorid-Lösung gefällt. Dabei kann das molare Verhältnis der Ladungen des zwei-, drei- oder vierwertigen Metallkations zu denen der Säuregruppen der Säurekomponente der Metallseifen zwischen 1:100 bis 10:1 liegen, vorzugsweise zwischen 1:50 und 5:1, insbesondere zwischen 1:10 und 3:1. Nach erfolgter Vereinigung aller Komponenten und gegebenenfalls Einstellung des pH-Werts auf einen Wert zwischen 2 und 12, vorzugsweise 2 und 11, wird die Reaktionsmischung zweckmäßigerweise über ein Filter, gegebenenfalls unter Druck und noch im erwärmten Zustand, von der flüssigen Phase abgetrennt, mit deionisiertem Wasser oder einem Wasser-Lösemittel-Gemisch, beispielsweise einer Wasser-Alkohol-Mischung, von Verunreinigungen freigewaschen, wobei der Waschvorgang mittels Leitfähigkeit kontrolliert wird und eine Leitfähigkeit des Filtrats von < 10 mS/cm, vorzugsweise < 1 m S/cm, angestrebt wird, anschließend getrocknet, beispielsweise mittels Umlufttrocknung, Vakuumtrocknung, Spinflushtrocknung, Sprühtrocknung oder Wirbelbetttrocknung, und gegebenenfalls zu einem Pulver vermahlen.

Gegenstand der Erfindung ist weiterhin die Verwendung des erfindungsgemäßen hydrophobierten Metallhydroxid-Salzes als Ladungssteuermittel in elektrophotographischen Tonern und Entwicklern, Pulverlacken, Elektretmaterialien, electronic Ink (e-Ink), electronic Paper (e-Paper) und in elektrostatischen Trennvorgängen sowie als externes Additiv zur Steuerung der Rieselfähigkeit und der Ladung von Pulvertonern, sowie als Anti-Offset-Agent.

Die erfindungsgemäßen Metallhydroxide werden dabei einzeln oder in Kombination miteinander oder mit weiteren, nachstehend genannten Komponenten, in einer Konzentration von 0,01 bis 50 Gew.-%, vorzugsweise von 0,05 bis 20 Gew.-%, besonders bevorzugt von 0,1 bis 5,0 Gew.-%, bezogen auf die Gesamtmischung, in das Bindemittel des jeweiligen Toners, Entwicklers, Pulverlacks, Elektretmaterials oder des elektrostatisch zu trennenden Polymers homogen, beispielsweise durch Extrudieren oder Einkneten, Perlmahlen oder mit Ultraturrax (Schnellrührer) eingearbeitet, Dabei können die erfindungsgemäß eingesetzten Verbindungen als getrocknete und gemahlene Pulver, kolloidale Lösungen, Presskuchen, Masterbatches, Präparationen, angeteigte Pasten, als auf geeignete Träger, wie z.B. Kieselgel bzw. mit solchen Trägern vermischt, TiO₂, Al₂O₃, Ruß, aus wässriger oder nicht-wässriger Dispersion aufgezogene Verbindungen zugegeben werden. Ebenso können die erfindungsgemäß verwendeten Verbindungen grundsätzlich auch schon bei der Herstellung der jeweiligen Bindemittel zugegeben werden, d.h. im Verlauf von deren Polymerisation, Polyaddition oder Polykondensation, sowie bei der Herstellung von chemischen Tonern, beispielsweise während der Suspensions- oder Emulsions-Polymerisation, oder bei der Aggregation der emulgierten Bestandteile zu Tonerteilchen, sowie bei polyester-basierenden chemischen Tonern. Die Ladungssteuermittel-Partikel, die nach der Dispergierung im Bindemittel vorliegen, sollten kleiner als 1 µm, vorzugsweise kleiner als 0,5 *µ*m, sein, wobei eine enge Teilchengrößen-Verteilung von Vorteil ist.

Die erfindungsgemäßen Ladungssteuermittel können auch in Form feinverteilter wässriger, wässrig-organischer oder organischer Dispersionen eingesetzt werden. Die Teilchengrößen (d₅₀-Werte) liegen zwischen 20 nm und 1 µm, bevorzugt zwischen 50 und 500 nm. Zweckmäßig sind Konzentrationen an Ladungssteuermittel zwischen 0,01 und 50 Gew.-%, vorzugsweise zwischen 0,1 und 30 Gew.-%, bezogen auf das Gesamtgewicht der Dispersion.
Im Falle wässriger oder wässrig-organischer Dispersionen wird Wasser vorzugsweise in Form von destilliertem oder entsalztem Wasser eingesetzt.
Im Fall organischer oder wässrig-organischer Dispersionen, auch bei der Herstellung der erfindungsgemäßen Verbindungen, werden als organisches Medium ein oder mehrere organische Lösemittel eingesetzt, vorzugsweise aus der Gruppe der ein- oder mehrwertigen Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 6 C-Atomen, z. B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmonomethyl- oder ethyl- oder butylether, Triethylenglykolmonomethyl- oder ethylether; Ketone und Ketonalkohole, wie z.B. Aceton, Methylethylketon, Di-ethylketon, Methylisobutylketon, Methylpentylketon, Cyclopentanon, Cyclohexanon, Diacetonalkohol; Amide, wie z.B. Dimethylformamid, Dimethylacetamid und N-Methylpyrrolidon.
Zur Herstellung stabiler Dispersionen können zusätzlich noch übliche ionische oder nichtionische niedermolekulare oder polymere Dispergierhilfsmittel, wie z.B. Sulfate, Sulfonate, Phosphate, Polyphosphate, Carbonate, Carboxylate, Carbonsäuren, Silicate, Hydroxide, Metallseifen, Polymere, wie Acrylate, Fettsäurederivate und Glycosidverbindungen, eingesetzt werden.
Weiterhin können die Dispersionen Metallkomplexbildner, wie z.B. EDTA oder NTA, enthalten. Weiterhin können die Dispersionen noch weitere übliche Zusatzstoffe enthalten, wie beispielsweise Konservierungsmittel, Biocide, Antioxidantien, Entgaser/Entschäumer sowie Mittel zur Regulierung der Viskosität, z.B. Polyvinylalkohol, Cellulosederivate oder wasserlösliche natürliche oder künstliche Harze und Polymere als Filmbildner bzw. Bindemittel zur Erhöhung der Haft- und Abriebfestigkeit. Als pH-Regulatoren kommen organische oder anorganische Basen und Säuren zum Einsatz. Bevorzugte organische Basen sind Amine, wie z.B. Ethanolamin, Diethanolamin, Triethanolamin, Diethylaminoethanol (DEAE), N,N-Dimethyl-ethanolamin, Diisopropylamin, Aminomethylpropanol oder Dimethylminomethylpropanol. Bevorzugte anorganische Basen sind Natrium-, Kalium-, Lithiumhydroxid oder Ammoniak. Weitere Bestandteile können hydrotrope Verbindungen sein, wie z.B. Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, Zucker, N-Methylpyrrolidon, 1,3-Diethyl-2-imidazolidinon, Thiodiglykol, Natrium-Benzolsulfonat, Na-Xylolsulfonat, Na-Toluolsulfonat, Na-Cumolsulfonat, Na-Benzoat, Na-Salicylat oder Na-Butylmonoglykolsulfat.

Die erfindungsgemäß eingesetzten Ladungssteuermittel können auch mit bereits bekannten positiv oder negativ steuernden Ladungssteuermitteln kombiniert werden, um bestimmte Aufladungen zu erzielen, wobei die Gesamt-Konzentration der Ladungssteuermittel zweckmäßig zwischen 0,01 und 50 Gew.-%, bevorzugt zwischen 0,05 und 20 Gew.-%, besonders bevorzugt zwischen 0,1 und 5 Gew.-%, liegt, bezogen auf das Gesamtgewicht des elektrophotographischen Toners, Entwicklers, Pulvers oder Pulverlacks.

Als weitere Ladungssteuermittel kommen beispielsweise in Betracht:
Triphenylmethane; Ammonium- und Immoniumverbindungen, Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate, Phenolderivate; Phosphoniumverbindungen und fluorierte Phosphoniumverbindungen; Calix(n)arene, ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall-Komplexe und Salicylat-Nichtmetalkomplexe, Hydroxycarbonsäure-Metall-Komplexe und Hydroxycarbonsäure-Nichtmetallkomplexe, Benzimidazolone; Azine, Thiazine oder Oxazine, die im Colour Index als Pigments, Solvent Dyes, Basic Dyes oder Acid Dyes aufgeführt sind, sowie hochdisperse Metalloxide, wie z.B. SiO₂, TiO₂ oder Al₂O₃, die oberflächenmodifiziert sein können, beispielsweise mit Carboxylat-, Amino-, Ammonium-Gruppen.

Beispiele bekannter Ladungssteuermittel sind in der WO 01/40878 A1 aufgelistet.

Um elektrophotographische Bunttoner herzustellen, auch als Farbtoner-Set zweier oder mehrerer der Farben Schwarz, Cyan, Gelb, Magenta, Grün, Orange, Rot und Blau werden Farbmittel wie organische Buntpigmente, anorganische Pigmente oder Farbstoffe, üblicherweise in Form von Pulvern, Dispersionen, Presskuchen, Lösungen oder Masterbatches zugesetzt.
Die organischen Buntpigmente können aus der Gruppe der Azopigmente oder polycyclischen Pigmente oder Mischkristalle (solid solutions) solcher Pigmente sein.

Bevorzugte Blau- und/oder Grünpigmente sind Kupferphthalocyanine, wie C.I. Pigment Blue 15, 15:1, 15:2, 15:3, 15:4, 15:6, P. Blue 16 (metallfreies Phthalocyanin), oder Phthalocyanine mit Aluminium, Nickel, Eisen oder Vanadium als Zentralatom, weiterhin Triarylcarboniumpigmente, wie Pigment Blue 1, 2, 9, 10, 14, 60, 62, 68, 80, Pigment Green 1, 4, 7, 45; Orange-Pigmente, wie z.B. P.O. 5, 62, 36, 34, 13, 43, 71; Gelbpigmente, wie z.B. P.Y. 12, 13, 14, 17, 74, 83, 93, 97, 111, 122, 139, 151, 155, 180, 174, 175, 185, 188, 191, 213, 214, Rot-Pigmente, wie z.B. P.R. 48, 57, 122, 146, 147, 149, 150, 184, 185, 186, 202, 207, 209, 238, 254, 255, 269, 270, 272, Violett-Pigmente wie P.V. 1, 19, Ruß, Eisen/Mangan-Oxide; weiterhin Mischkristalle aus C.I. Pigment Violett 19 und C.I. Pigment Red 122.

Insbesondere zur Steigerung der Brillanz, aber auch zur Nuancierung des Farbtones bieten sich Mischungen mit organischen Farbstoffen an. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Beispiele seien genannt: C.I. Reactive Yellow 37, Acid Yellow 23, Reactive Red 23, 180, Acid Red 52, Reactive Blue 19, 21, Acid Blue 9, Direct Blue 199, Solvent Yellow 14, 16, 25, 56, 62, 64, 79, 81, 82, 83, 83:1, 93, 98, 133, 162, 174, Solvent Red 8, 19, 24, 49, 89, 90, 91, 92, 109, 118, 119, 122, 124, 127, 135, 160, 195, 212, 215, Solvent Blue 44, 45, Solvent Orange 41, 60, 63, Disperse Yellow 64, Vat Red 41, Solvent Black 45, 27.

Selbstverständlich können die erfindungsgemäßen elektrophotographischen Toner und Pulverlacke auch weitere zugesetzte Wachse, wie vorstehend erwähnt beispielsweise als "anti-offset-Agents", enthalten.
Die erfindungsgemäßen Verbindungen können einzeln oder in Kombination mit "free-flow-agents", wie z.B. hochdisperse Kieselsäuren, Metalloxide oder Metallseifen, auch als externe Additive zu fertigen Pulvertonern zur Rieselverbesserung, zur Verbesserung der Adhäsionseigenschaften und zur elektrostatischen Feinjustierung zugegeben werden.
Gegenstand der vorliegenden Erfindung ist auch ein elektrophotographischer Toner, Pulver oder Pulverlack, enthaltend 30 bis 99,99 Gew.-%, vorzugsweise 40 bis 99,5 Gew.-%, eines üblichen Bindemittels, beispielsweise ein Styrol-, Styrolacrylat-, Styrolbutadien-, Acrylat-, Urethan-, Acryl-, Polyester- oder Epoxidharz oder eine Kombination der letzten beiden, 0,01 bis 50 Gew.-%, vorzugsweise 0,05 bis 20 Gew.-%, besonders bevorzugt 0,1 bis 5 Gew.-%, mindestens eines hydrophobierten salzartigen Metallhydroxids, und gegebenenfalls 0,001 bis 50 Gew.-%, vorzugsweise 0,05 bis 20 Gew.-%, eines Farbmittels, jeweils bezogen auf das Gesamtgewicht des elektrophotographischen Toners, Pulvers oder Pulverlacks.

In den nachfolgenden Beispielen bedeuten Prozent Gewichtsprozent.

### Herstellungsbeispiel 1

30 g eines hydrothermal hergestellten Mg-Al-Hydroxid-Carbonats (MgO:Al₂O₃=61:39 Gew.-%, Pural MG 61 HT, Fa. Sasol, Deutschland) werden in 100 ml deionisiertem Wasser 30 min bei 60°C mittels Rühren dispergiert. Dann werden 4,5 g pulverförmige Sebacinsäure zugegeben und die Mischung mittels einer 10 %igen Natriumhydroxid-Lösung auf einen pH-Wert von ca. 8 eingestellt. Nach 2 Stunden Reaktionszeit werden 60g einer 10 %igen wässrigen Montansäurewachs-Dispersion zugegeben, die durch Zugabe von 10 Teilen geschmolzenem Montansäurewachs (Licowax S, Fa. Clariant, Säurezahl 127-160 mg KOH/g, Tropfpunkt 79-85°C) in eine ca. 70°C-warme wässrige Lösung, bestehend aus 2 Teilen Ölsäure, 4 Teilen Diethylaminoethanol (DEAE) und 84 Teilen deionisiertem Wasser, hergestellt wurde. Die Reaktionsmischung wird noch 1 Stunde bei 85°C gerührt, anschließend auf ca. 50°C abgekühlt, danach die Suspension abfiltriert, mehrmals mit deionisiertem Wasser nachgewaschen und anschließend bei 60-80°C im Vakuum getrocknet.
Ausbeute: 36,8g weißes Pulver.

### Charakterisierung:

| Aussehen: | weißes Pulver |
|---|---|
| DSC: | keine erkennbare Zersetzung bis 400°C |
| pH: | 7,9 |
| Leitfähigkeit: | 90 µS/cm |
| Restfeuchte: | 1,6 % |
| tan δ(1 kHz): | 0,5 |
| Ω cm: | 3 x 10⁹ |
| Löslichkeiten: | < 1 g/l (20°C) in Wasser, Ethanol, Aceton, Dimethylsulfoxid, n-Hexan |
| Teilchengrößenverteilung: | d₅₀ = 8 µm, d₉₅ = 18 µm (Laserlichtbeugung) |
| Mittlere Teilchengröße nach Dispersion in Diethylether: (Transmissions-Elektronenmikroskop) | ca. 200nm |

### Herstellungsbeispiel 2

30g eines hydrothermal hergestellten Mg-Al-Hydroxid-Carbonats (MgO:Al₂O₃=70:30 Gew.-%, 0,1 bis 3 Gew.-% Carbonat, Pural MG 70 HT, Fa. Sasol, Deutschland) werden in 100 ml deionisiertem Wasser 30 min bei 60°C mittels Rühren dispergiert. Dann werden 3,0 g pulverförmige Sebacinsäure zugegeben und die Mischung mittels einer 10 %igen Natriumhydroxid- Lösung auf einen pH-Wert von ca. 8-9 eingestellt. Nach 1 Stunde Reaktionszeit werden 90 g einer 10 %igen wässrigen Montansäureesterwachs-Dispersion zugegeben, die durch Zugabe von 10 Teilen geschmolzenem Montansäureesterwachs (Licowax F, Fa. Clariant, Säurezahl 6-10 mg KOH/g, Tropfpunkt 75-81 °C) in eine ca. 95°C-warme wässrige Lösung, bestehend aus 0,7 Teilen 21 %iger KOH-Ethylenglykol-Lösung, 3 Teilen 10 %iger Polyvinylalkohol-Lösung (Mowiol 4-88, Fa. Kuraray, Deutschland) und 86,3 Teilen deionisiertem Wasser, hergestellt wurde. Dann werden weitere 3,0 g pulverförmige Sebacinsäure zugegeben und die Mischung mittels einer 10 %igen Natriumhydroxid-Lösung wieder auf einen pH-Wert von ca. 8-9 eingestellt.
Die Reaktionsmischung wird noch 1 Stunde bei 80°C gerührt, anschließend auf ca. 50°C abgekühlt, danach die Suspension abfiltriert, mehrmals mit deionisiertem Wasser nachgewaschen und anschließend bei 60-80°C im Vakuum getrocknet. Ausbeute: 39,7 g weißes Pulver.

### Herstellungsbeispiel 3

25g eines Mg-Al-Hydroxid-Carbonats (MgO:Al₂O₃=70:30 Gew.-%, Carbonatgehalt ca. 4 Gew.-%, Pural MG 70 C, Fa. Sasol, Deutschland) werden in 100 ml deionisiertem Wasser 30 min bei 60°C mittels Rühren dispergiert. Dann werden 4,5g pulverförmige Sebacinsäure zugegeben und die Mischung mittels einer 10%igen Natriumhydroxid-Lösung auf einen pH-Wert von ca. 8-9 eingestellt. Nach 1 Stunde Reaktionszeit wird eine wässrige Aluminium-Stearat-Dispersion zugegeben, die durch Lösen von 5 Teilen Stearinsäure, 95 Teilen deionisiertem Wasser, 1,8 Teilen Natriumhydroxid, 8 Teilen iso-Propanol und 0,5 Teilen Kokosfettalkoholpolyglykolether (Genapol C 050, Fa. Clariant, Deutschland) bei 80°C, anschließender Fällung bei gleicher Temperatur mit einer Lösung von 6,0 Teilen Al₂(SO₄)₃·18H₂O in 50 Teilen deionisiertem Wasser und Einstellung der gefällten Suspension auf einen pH-Wert von 8-9, hergestellt wurde. Dann werden weitere 2,0 g Sebacinsäure, gelöst in 20 g wässriger Natronlauge, zugegeben und die Mischung erneut auf einen pH-Wert von ca. 8-9 eingestellt.

Die Reaktionsmischung wird noch 1 Stunde bei 80°C gerührt, anschließend auf ca. 50°C abgekühlt, danach die Suspension abfiltriert, mehrmals mit deionisiertem Wasser nachgewaschen und anschließend bei 60-80°C im Vakuum getrocknet. Ausbeute: 31,8g weißes Pulver.

In analoger Weise werden die in nachstehender Tabelle aufgeführten Verbindungen hergestellt: Herstellungsbeispiele 4 bis 13:

| Bsp. Nr. | Metallhydroxid/oxid | Anion(en) | gemäß Bsp. | Wachs/wachsartige Komponente |
|---|---|---|---|---|
| 4 | Pural MG 70 C | Sebacinsäure | 2 | Licowax S |
| 5 | Pural MG 70 C | Stearinsäure | 2 | Licowax F |
| 6 | Pural MG 70 HT | Sebacinsäure | 2 | Licowax S |
| 7 | Pural MG 70 HT | Sebacinsäure | 3 | Al-Stearat |
| 8 | Pural MG 61 HT | Sebacinsäure | 1 | Licowax F |
| 9 | Pural MG 61 HT | Benzilsäure | 3 | ZrO-Stearat |
| 10 | Pural MG 70 | Sebacinsäure | 1 | Erucasäureamid |
| 11 | Pural MG 70 | Sebacinsäure | 3 | Zn-Stearat |
| 12 | Pural MG 30 | Salicylsäure | 1 | Licowax S |
| 13 | Puralox MG 70 (calciniert) | Sebacinsäure | 1 | Licowax S |

### Charakterisierung Herstellungsbeispiel 4:

| Aussehen: | weißes Pulver |
|---|---|
| DSC: | keine Zersetzung bis 400°C |
| pH: | 7,7 |
| Leitfähigkeit: | 110 µS/cm |
| Restfeuchte: | 1,2 % |
| tan δ (1 kHz): | 1,1 |
| Ω cm: | 1 x 10⁹ |
| BET | 36,4 m²/g |
| Teilchengrößenverteilung: | d₅₀ = 7 µm, d₉₅ = 17 µm (Laserlichtbeugung) |
| Löslichkeiten: | < 1 g/l (20°C) in Wasser, Ethanol, Aceton, Dimethylsulfoxid, n-Hexan |
| Mittlere Teilchengröße nach Dispersion in Diethylether: (Transmissions-Elektronenmikroskop) | ca. 150nm |

### Charakterisierung Herstellungsbeispiel 7:

| Aussehen: | weißes Pulver |
|---|---|
| DSC: | keine Zersetzung bis 400°C |
| pH: | 6,7 |
| Leitfähigkeit: | 195 µS/cm |
| Restfeuchte: | 1,4 % |
| tan δ (1 kHz): | 1,0 |
| Ω cm: | 6 x 10⁹ |
| BET | 33,5 m²/g |
| Teilchengrößenverteilung: | d₅₀ = 8 µm, d₉₅ = 17 µm (Laserlichtbeugung) |
| Löslichkeiten: | < 1 g/l (20°C) in Wasser, Ethanol, Aceton, Dimethylsulfoxid, n-Hexan |
| Mittlere Teilchengröße nach Dispersion in Diethylether: (Transmissions-Elektronenmikroskop) | ca. 150nm |

### Anwendungsbeispiel 1a:

1 Teil der Verbindung aus Herstellungsbeispiel 1 wird mittels eines Kneters innerhalb von 30 Minuten in 99 Teile eines Polyesterharzes auf Bisphenol-A-Basis (^{®}Fine Tone 382-ES) homogen eingearbeitet. Anschließend wird auf einer Labor-Universalmühle gemahlen und dann auf einem Zentrifugalsichter klassifiziert. Die gewünschte Teilchenfraktion (4 bis 25 *µ*m) wird bei 25°C/40-60% rel. Luftfeuchte mit einem Carrier aktiviert, der aus silikonbeschichteten Ferrit-Teilchen der Größe 50 bis 200 µm besteht.

### Anwendungsbeispiel 1b:

Es wird wie in Anwendungsbeispiel 1a verfahren, wobei die Aktivierung des Toners mit dem Carrier nach einer 24 stündigen Lagerung der Toner-CarrierMischung bei 25°C/90 % rel. Luftfeuchte durchgeführt wird.

Die Messung erfolgt an einem üblichen q/m-Messstand. Durch Verwendung eines Siebes mit einer Maschenweite von 45 *µ*m wird sichergestellt, dass bei den Tonerausblasungen kein Carrier mitgerissen wird. In Abhängigkeit von der Aktivierdauer werden die in der nachstehenden Tabelle angegebenen q/m-Werte [*µ*C/g] gemessen:

| Aktivierdauer | Anwendungsbeispiel | |
|---|---|---|
| | 1a | 1b |
| | Aufladung q/m [µC/g] | |
| 5 Min. | -19 | -10 |
| 10 Min. | -20 | -11 |
| 30 Min. | -22 | |
| 2 Std. | -22 | |

### Anwendungsbeispiele 2a bis 13:

Es wird wie in Anwendungsbeispiel 1 verfahren, wobei anstelle der Verbindung aus Herstellungsbeispiel 1 die Verbindungen der übrigen Herstellungsbeispiele eingesetzt werden.
Die in den Anwendungsbeispielen eingesetzten Verbindungen entsprechen den Herstellungsbeispielen gleicher Nummer.

| Bsp. | gemäß | q/m [µC/g] | | | |
|---|---|---|---|---|---|
| Nr. | Anw.bsp. | 5 Min. | 10 Min. | 30 Min. | 2 Std. |
| 2a | 1a | -20 | -22 | -23 | -24 |
| 2b | 1b | -10 | -10 | | |
| 3a | 1a | -21 | -22 | -23 | -25 |
| 3b | 1b | -10 | -11 | | |
| 4 | 1a | -17 | -19 | -10 | -20 |
| 5a | 1a | -19 | -21 | -22 | -22 |
| 5b | 1b | -9 | -10 | | |
| 6 | 1a | -17 | -18 | -19 | -20 |
| 7a | 1a | -20 | -22 | -23 | -23 |
| 7b | 1b | -10 | -11 | | |
| 8a | 1a | -20 | -21 | -21 | -22 |
| 8b | 1b | -10 | -10 | | |
| 9 | 1a | -19 | -20 | -21 | -21 |
| 10a | 1a | -20 | -21 | -22 | -22 |
| 10b | 1b | -10 | -10 | | |
| 11 | 1a | -21 | -22 | -23 | -23 |
| 12 | 1a | -15 | -16 | -16 | -17 |
| 13 | 1a | -17 | -18 | -18 | -18 |

### Anwendungsbeispiele 14 bis 19:

Es wird wie in Anwendungsbeispiel 1a, 2a bzw. 3a verfahren, wobei anstelle von 1 Teil jeweils 0,5 oder 2 Teile der jeweiligen Verbindungen aus den entsprechenden Herstellungsbeispielen eingesetzt werden.

| Bsp. | Herstell | | q/m [µC/g] | | | |
|---|---|---|---|---|---|---|
| Nr. | Bsp. Nr. | Teile | 5 Min. | 10 Min. | 30 Min. | 120 Min. |
| 14 | 1 | 0,5 | -17 | -18 | -19 | -19 |
| 15 | 1 | 2 | -22 | -24 | -25 | -25 |
| 16 | 2 | 0,5 | -18 | -19 | -20 | -20 |
| 17 | 2 | 2 | -23 | -25 | -27 | -27 |
| 18 | 3 | 0,5 | -18 | -19 | -21 | -21 |
| 19 | 3 | 2 | -24 | -26 | -28 | -28 |

### Anwendungsbeispiele 20 bis 25:

Es wird wie in den Anwendungsbeispielen 1a bzw. 3a verfahren, wobei zusätzlich noch 5 Teile eines organischen Pigments (Ruß ^{®}Mogul L, Cabot; ^{®}Toner Magenta E 02, Clariant (C.I. Pigment Red 122); ^{®}Toner Yellow HG, Clariant (C.I. Pigment Yellow 180)) eingearbeitet werden.

| Bsp. | Teile | Herstell | organisches | q/m [µC/g] | | | |
|---|---|---|---|---|---|---|---|
| Nr. | | Bsp. | Pigment | 5 Min. | 10 Min. | 30 Min. | 120 Min. |
| 20 | 1 | 1 | Toner Magenta E 02 | -18 | -19 | -20 | -20 |
| 21 | 1 | 1 | Toner Yellow HG | -20 | -21 | -22 | -23 |
| 22 | 1 | 1 | Ruß | -18 | -19 | -19 | -19 |
| 23 | 1 | 3 | Toner Magenta E 02 | -19 | -21 | -22 | -22 |
| 24 | 1 | 3 | Toner Yellow HG | -21 | -22 | -23 | -23 |
| 25 | 1 | 3 | Ruß | -20 | -21 | -21 | -21 |

### Anwendungsbeispiele 26 bis 28:

Es wird wie in Anwendungsbeispiel 1a, 2a bzw. 3a verfahren, wobei zusätzlich noch 2 Teile eines Farbmittels mit elektrostatisch positivem Eigeneffekt (C.I. Solvent Blue 125-eingearbeitet werden.

| Bsp. | Herstell. | Teile | q/m [µC/g] | | | |
|---|---|---|---|---|---|---|
| Nr. | Bsp. | Farbmittel | 5 Min. | 10 Min. | 30 Min. | 120 Min. |
| 26 | 1 | 2 | -8 | -5 | -4 | -2 |
| 27 | 2 | 2 | -7 | -4 | -3 | -1 |
| 28 | 3 | 2 | -9 | -6 | -4 | -3 |

### Vergleichsbeispiel A:

Es wird wie in Anwendungsbeispiel 1a und 1b verfahren, wobei jedoch anstelle der Verbindung aus Herstellungsbeispiel 1 die entsprechende Verbindung ohne den erfindungsgemäßen Hydrophobisierungsschritt eingesetzt wird:

| Aktivierdauer | Vergleichsbeispiel A | |
|---|---|---|
| | gemäß 1a | gemäß 1b |
| | Aufladung q/m [µC/g] | |
| 5 Min. | -19 | -2 |
| 10 Min. | -21 | -2 |
| 30 Min. | -22 | |
| 2 Std. | -23 | |

Die Triboaufladung unter hohen Luftfeuchtebedingungen ist deutlich schwächer ausgeprägt als beim erfindungsgemäßen Produkt.

### Vergleichsbeispiel B:

Es wird wie in Anwendungsbeispiel 8a und 8b verfahren, wobei jedoch anstelle der Verbindung aus Herstellungsbeispiel 8 die entsprechende Verbindung ohne den erfindungsgemäßen Hydrophobisierungsschritt aber unter Zugabe von 2 Gew.-%, bezogen auf das Gesamtgewicht des Toners, pulverförmigem Wachs (Licowax F, Clariant) in das Bindemittelsystem eingesetzt wird:

| Aktivierdauer | Vergleichsbeispiel B | |
|---|---|---|
| | gemäß 1a | gemäß 1b |
| | Aufladung q/m [µC/g] | |
| 5 Min. | -21 | -3 |
| 10 Min. | -22 | -3 |
| 30 Min. | -23 | |
| 2 Std. | -24 | |

Die Triboaufladung unter hohen Luftfeuchtebedingungen ist deutlich schwächer ausgeprägt als beim erfindungsgemäßen Produkt. Das bedeutet, dass die getrennte Zugabe des pulverförmigen Wachses keinerlei Hydrophobierungseffekte hinsichtlich der Triboaufladung zeigt, obwohl sogar in viel höherer Menge als in Herstellungsbeispiel 8 eingesetzt.

## Patentansprüche

1. Hydrophobiertes Salz eines schichtartigen Metallhydroxids, das **dadurch** erhältlich ist, indem man einem schichtartigen Metallhydroxidsalz, welches dreiwertige, zweiwertige und gegebenenfalls einwertige Metallkationen, und ein oder mehrere organische Anionen A der Formel (I) enthält
X-R-Y (I),
worin
X Wasserstoff, Hydroxy, Carboxy, Sulfato oder Sulfo;
Y Carboxy, Sulfato oder Sulfo, und
R ein aliphatischer, cycloaliphatischer, heterocycloaliphatischer, olefinischer, cycloolefinischer, heterocycloolefinischer, aromatischer, heteroaromatischer, araliphatischer oder heteroaraliphatischer Rest mit 2 bis 50 C-Atomen bedeutet, worin ein oder mehrere Substituenten aus der Gruppe Hydroxy, Amino, Halogen, C₁-C₂₂-Alkyl, C₁-C₂₂-Alkoxy, C₁-C₂₂-Alkylen-(CO)-O-(CH₂CH₂O)₀₋₅₀-Alkyl, C₁-C₂₂-Alkylen-(CO)-O-(CH₂CH₂O)₀₋₅₀-Halogenalkyl, Carboxy, Sulfo, Nitro oder Cyano enthalten sein können,
in Dispersion unter intensiver Durchmischung eine oder mehrere hydrophobe Verbindungen aus der Gruppe der Wachse und Metallseifen, in einer Menge von 0,2 bis 200 Gew.-%, bezogen auf das Metallhydroxidsalz, zusetzt, und gegebenenfalls das flüssige Medium entfernt, trocknet und als Pulver isoliert, wobei die Metallseife eine Verbindung aus der Gruppe der zwei-, drei- oder vierwertigen Metallsalze von gesättigten oder ungesättigten C₇-C₄₃-Carbonsäuren, C₈-C₄₄-Sulfonaten, C₈-C₄₄-Sulfaten, C₈-C₄₄-Phosphaten, Säurewachsen, teilveresterten Säurewachsen, teilhydrolysierten Esterwachsen oder oxidierten PE-Wachsen, oder eine Verbindung aus der Gruppe der zwei-, drei- oder vierwertigen Metallsalze von C₈-C₄₄-Alkylethersulfaten, C₈-C₄₄-Alkylamidoethersulfate, C₈-C₄₄-Aralkylsulfonate (wobei Aryl C₆-C₁₂ und Alkyl C₁-C₃₂ bedeuten), C₈-C₄₄-Alkylethersulfosuccinate, C₈-C₄₄-N-Alkylsulfosuccinamate, C₈-C₄₄-Acylglutamate, C₈-C₄₄-Fettsäureisethionate, C₈-C₄₄-Fettsäuremethyltauride, C₈-C₄₄-Fettsäuresarcoside ist.

2. Hydrophobiertes Salz nach Anspruch 1, **dadurch gekennzeichnet, dass** man eine oder mehrere hydrophobe Verbindungen aus der Gruppe der Wachse und Metallseifen in einer Menge von 1 bis 200 Gew.-%, bezogen auf das Metallhydroxidsalz, zusetzt.

3. Hydrophobiertes Salz eines schichtartigen Metallhydroxids nach Anspruch 1 oder 2, **dadurch gekennzeichnet, dass** das Metallhydroxid ein Mehrfachhydroxid ist, wobei das molare Verhältnis der zweiwertigen Metallkationen zu den dreiwertigen Metallkationen zwischen 1000 und 0,001 liegt.

4. Hydrophobiertes Salz eines schichtartigen Metallhydroxids nach einem oder mehreren der Ansprüche 1 bis 3, **dadurch gekennzeichnet, dass** die zweiwertigen Metallkationen Mg²⁺, Ca²⁺, Sr²⁺, Ba²⁺, Zn²⁺, Co²⁺, Ni²⁺, Fe²⁺, Cu²⁺ oder Mn²⁺ sind.

5. Hydrophobiertes Salz eines schichtartigen Metallhydroxids nach mindestens einem der Ansprüche 1 bis 3, **dadurch gekennzeichnet, dass** die dreiwertigen Metallkationen Al³⁺, Fe³⁺, Co³⁺, Mn³⁺, Cr³⁺, Sc³⁺ oder B³⁺ sind.

6. Hydrophobiertes Salz eines schichtartigen Metallhydroxids nach mindestens einem der Ansprüche 1 bis 5, **dadurch gekennzeichnet, dass** das organische Anion A
Benzilsäure, Salicylsäure, Benzoesäure, eine Naphthalindisulfonsäure, eine Naphthalindicarbonsäure, eine Hydroxynaphthoesäure, Milchsäure, Stearinsäure, Arachinsäure, Behensäure, Erucasäure, Octandicarbonsäure, Decandicarbonsäure (Sebacinsäure), Dodecandicarbonsäure, Tetradecandicarbonsäure, Hexadecandicarbonsäure, Octadecandicarbonsäure, Naphthalintetracarbonsäure, Sulfobernsteinsäure-(C₆-C₂₀)-Alkylmonoester oder Sulfobernsteinsäure-(C₆-C₂₂)-Fluoralkylmonoester ist.

7. Hydrophobiertes Salz eines schichtartigen Metallhydroxids nach mindestens einem der Ansprüche 1 bis 6, **dadurch gekennzeichnet, dass** das Wachs eine Verbindung aus der Gruppe der Säurewachse, Esterwachse, Amidwachse, Carnaubawachse, Polyolefinwachse, Polyolefinabbauwachse, oxidierten PE- oder PP-Wachse, durch Pfropfung mit Monomeren modifizierte PP-Wachse, Polyolefin-Metallocenwachse und Paraffinwachse oder eine Mischung davon ist.

8. Hydrophobiertes Salz eines schichtartigen Metallhydroxids nach mindestens einem der Ansprüche 1 bis 7, welches ein Mg-Al-Doppelhydroxidsalz mit einem molaren Verhältnis Mg:Al von 1000:1 bis 1:1000 ist; mit 0,1 bis 30 Gew.-% Sebacinsäure und/oder 0,1 bis 75 Gew.-% Stearinsäure als organischem Anion; und mit 1 bis 150 Gew.-%, jeweils bezogen auf das Gewicht des Mg-Al-Doppelhydroxid-Salzes, Montansäurewachs, teilverestertem Montansäurewachs, Hydroxistearinsäureester-Wachs, Erucasäureamidwachs, Behensäureamidwachs, Carnaubawachs, Montansäureesterwachs, teilhydrolysiertem Montansäureesterwachs, oxidiertem oder durch Pfropfung polar gemachtem Polyolefinwachs, oder Zn-, Pb-, Sn-, TiO-, ZrO-, Mg-, Ca-, Sr-, Ba- oder Al-Salz von gesättigten oder ungesättigten C₇-C₄₃-Carbonsäuren, C₈-C₄₄-Sulfonaten, C₈-C₄₄-Sulfaten, C₈-C₄₄-Phosphaten, Säurewachsen, teilveresterten Säurewachsen, teilhydrolysierten Esterwachsen oder oxidierten PE-Wachsen als hydrophober Verbindung.

9. Hydrophobiertes Salz eines schichtartigen Metallhydroxids nach mindestens einem der Ansprüche 1 bis 8, welches ein Magnesium-Aluminium-Doppelhydroxid-Carbonat mit 0,1 bis 4 Gew.-% Carbonat, mit einem molaren Verhältnis von Mg zu Al von 5:1 bis 1:5 ist, mit 0,1 bis 20 Gew.-% Mono- oder Di-Anionen der Sebacinsäure und/oder 0,1 bis 50 Gew.-% Stearinsäure; und mit 2 bis 100 Gew.-%, jeweils bezogen auf das Gewicht des Mg-Al-Doppelhydroxid-Carbonats, eines oder mehrerer Wachse aus der Gruppe der Montansäurewachse, Montansäureesterwachse, teilhydrolysierten Montansäureesterwachse, Hydroxystearinsäureesterwachse, Erucasäureamidwachse, Behensäureamidwachse, Carnaubawachse, oxidierten oder gepfropften Polyolefinwachse, oder der Mg-, Ca-, Zn-, Al- oder ZrO-Salze der Stearinsäure, Arachinsäure, Behensäure, Erucasäure, Dodecylschwefelsäure oder Kokosalkylsulfonsäure.

10. Verfahren zur Herstellung eines hydrophobierten Salzes eines schichtartigen Metallhydroxids nach einem oder mehreren der Ansprüche 1 bis 9, **dadurch gekennzeichnet, dass** man einem schichtartigen Metallhydroxid-Salz, welches dreiwertige, zweiwertige und gegebenenfalls einwertige Metallkationen und ein oder mehrere organische Anionen A der Formel (I) gemäß Anspruch 1 enthält, in wässriger, wässrig-organischer oder organischer Dispersion, unter intensiver Durchmischung, eine oder mehrere hydrophobe Verbindungen aus der Gruppe der Wachse und Metallseifen, in einer Menge von 0,2 bis 200, vorzugsweise 1 bis 200 Gew.-%, bezogen auf das Metallhydroxidsalz, zusetzt, und gegebenenfalls das flüssige Medium entfernt, trocknet und als Pulver isoliert.

11. Verfahren zur Herstellung eines hydrophobierten Salzes eines 9, schichtartigen Metallhydroxids nach einem oder mehreren der Ansprüche 1 bis 9, **dadurch gekennzeichnet, dass** man ein schichtartiges Metallhydroxid, welches dreiwertige, zweiwertige und gegebenenfalls einwertige Metallkationen enthält, in Gegenwart von 0,2 bis 200, vorzugsweise 1 bis 200 Gew.-%, bezogen auf das Metallhydroxidsalz, einer oder mehrerer hydrophober Verbindungen aus der Gruppe der Wachse und Metallseifen, in wässriger, wässrig-organischer oder organischer Dispersion unter intensiver Durchmischung mit einem oder mehreren organischen Anionen A der Formel (I) gemäß Anspruch 1, umsetzt, und gegebenenfalls das flüssige Medium entfernt, trocknet und als Pulver isoliert.

12. Verfahren nach Anspruch 10 oder 11, **dadurch gekennzeichnet, dass** man die Metallseife in der wässrigen, wässrig-organischen oder organischen Dispersion durch Fällung erzeugt.

13. Verfahren nach Anspruch 11 oder 12, **dadurch gekennzeichnet, dass** man die hydrophobe Verbindung als Lösung oder wässrige Dispersion bei einer Temperatur zwischen 20 und 200°C zugesetzt.

14. Verwendung eines hydrophobierten Salzes eines schichtartigen Metallhydroxids nach einem oder mehreren der Ansprüche 1 bis 9 als Ladungssteuermittel in elektrophotographischen Tonern und Entwicklern, Pulverlacken, Elektretmaterialien, Electronic Inks, Electronic Papers und in elektrostatischen Trennvorgängen.

15. Verwendung eines hydrophobierten Salzes eines schichtartigen Metallhydroxids nach einem oder mehreren der Ansprüche 1 bis 9 als externes Additiv in elektrophotographischen Tonern und Entwicklern zur Steuerung der Rieselfähigkeit und der Ladung von Pulvertonern, sowie als Anti-Offset-Agent.

## Claims

1. A hydrophobic salt of a layer-like metal hydroxide, which is obtainable by adding to a layer-like metal hydroxide salt, which contains trivalent, divalent and optionally monovalent metal cations and one or more organic anions A of the formula (I)
X-R-Y (I),
wherein
X denotes hydrogen, hydroxyl, carboxyl, sulfato or sulfo;
Y denotes carboxyl, sulfato or sulfo, and
R denotes an aliphatic, cycloaliphatic, heterocycloaliphatic, olefinic, cycloolefinic, heterocycloolefinic, aromatic, heteroaromatic, araliphatic or heteroaraliphatic radical having 2 to 50 carbon atoms, wherein one or more substituents from the group consisting of hydroxyl, amino, halogen, C₁-C₂₂-alkyl, C₁-C₂₂-alkoxy, C₁-C₂₂-alkylene-(CO)-O-(CH₂CH₂O)₀₋₅₀-alkyl, C₁-C₂₂-alkylene-(CO)-O-(CH₂CH₂O)₀₋₅₀-haloalkyl, carboxyl, sulfo, nitro or cyano can be present,
in dispersion, with intensive thorough mixing, one or more hydrophobic compounds from the group consisting of waxes and metal soaps in an amount of from 0.2 to 200 wt.%, based on the metal hydroxide salt, and optionally removing the liquid medium, drying the product and isolating it as a powder, the metal soap being a compound from the group consisting of di-, tri- or tetravalent metals salts of saturated or unsaturated C₇-C₄₃-carboxylic acids, C₈-C₄₄-sulfonates, C₈-C₄₄-sulfates, C₈-C₄₄-phosphates, acid waxes, partly esterified acid waxes, partly hydrolyzed ester waxes or oxidized PE waxes, or the metal soap being a compound from the group consisting of di-, tri- or tetravalent metals salts of C₈-C₄₄-alkyl ether-sulfates, C₈-C₄₄-alkylamido ether-sulfates, C₈-C₄₄-aralkylsulfonates (wherein aryl denotes C₆-C₁₂ and alkyl denotes C₁-C₃₂), C₈-C₄₄-alkyl ether-sulfosuccinates, C₈-C₄₄-N-alkylsulfosuccinamates, C₈-C₄₄-acyl glutamates, C₈-C₄₄-fatty acid isethionates, C₈-C₄₄-fatty acid methyltaurides, C₈-C₄₄-fafty acid sarcosides.

2. The hydrophobic salt as claimed in claim 1, **characterized in that** one or more hydrophobic compounds from the group consisting of waxes and metal soaps is/are added in an amount of from 1 to 200 wt.%, based on the metal hydroxide salt.

3. The hydrophobic salt of a layer-like metal hydroxide as claimed in claim 1 or 2, **characterized in that** the metal hydroxide is a multiple hydroxide, wherein the molar ratio of the divalent metal cations to the trivalent metal cations is between 1,000 and 0.001.

4. The hydrophobic salt of a layer-like metal hydroxide as claimed in one or more of claims 1 to 3, **characterized in that** the divalent metal cations are Mg²⁺, Ca²⁺ Sr²⁺, Ba²⁺, Zn²⁺, CO²⁺, Ni²⁺, Fe²⁺ CU²⁺ or Mn²⁺.

5. The hydrophobic salt of a layer-like metal hydroxide as claimed in at least one of claims 1 to 3, **characterized in that** the trivalent metal cations are Al³⁺, Fe³⁺, Co³⁺, Mn³⁺, Cr³⁺, Sc³⁺ or B³⁺.

6. The hydrophobic salt of a layer-like metal hydroxide as claimed in at least one of claims 1 to 5, **characterized in that** the organic anion A is benzilic acid, salicylic acid, benzoic acid, a naphthalenedisulfonic acid, a naphthalenedicarboxylic acid, a hydroxynaphthoic acid, lactic acid, stearic acid, arachic acid, behenic acid, erucic acid, octanedicarboxylic acid, decanedicarboxylic acid (sebacic acid), dodecanedicarboxylic acid, tetradecanedicarboxylic acid, hexadecanedicarboxylic acid, octadecanedicarboxylic acid, naphthalenetetracarboxylic acid, sulfosuccinic acid (C₆-C₂₀)-alkyl monoesters or sulfosuccinic acid (C₆-C₂₂)-fluoroalkyl monoesters.

7. The hydrophobic salt of a layer-like metal hydroxide as claimed in at least one of claims 1 to 6, **characterized in that** the wax is a compound from the group consisting of acid waxes, ester waxes, amide waxes, carnauba waxes, polyolefin waxes, polyolefin degradation waxes, oxidized PE or PP waxes, PP waxes modified by grafting with monomers, polyolefin metallocene waxes and paraffin waxes or a mixture thereof.

8. The hydrophobic salt of a layer-like metal hydroxide as claimed in at least one of claims 1 to 7, which is an Mg-Al double hydroxide salt having a molar ratio of Mg:Al of from 1,000:1 to 1:1,000, with 0.1 to 30 wt.% of sebacic acid and/or 0.1 to 75 wt.% of stearic acid as the organic anion; and with 1 to 150 wt.%, in each case based on the weight of the Mg-Al double hydroxide salt, of montan acid wax, partly esterified montan acid wax, hydroxystearic acid ester wax, erucic acid amide wax, behenic acid amide wax, carnauba wax, montan acid ester wax, partly hydrolyzed montan acid ester wax, polyolefin wax which is oxidized or rendered polar by grafting, or a Zn, Pb, Sn, TiO, ZrO, Mg, Ca, Sr, Ba or Al salt of saturated or unsaturated C₇-C₄₃-carboxylic acids, C₈-C₄₄-sulfonates, C₈-C₄₄-sulfates, C₈-C₄₄-phosphates, acid waxes, partly esterified acid waxes, partly hydrolyzed ester waxes or oxidized PE waxes as the hydrophobic compound.

9. The hydrophobic salt of a layer-like metal hydroxide as claimed in at least one of claims 1 to 8, which is a magnesium-aluminum double hydroxide carbonate with 0.1 to 4 wt.% of carbonate, having a molar ratio of Mg to Al of from 5:1 to 1:5, with 0.1 to 20 wt.% of mono- or di-anions of sebacic acid and/or 0.1 to 50 wt.% of stearic acid; and with 2 to 100 wt.%, in each case based on the weight of the Mg-Al double hydroxide carbonate, of one or more waxes from the group consisting of montan acid waxes, montan acid ester waxes, partly hydrolyzed montan acid ester waxes, hydroxystearic acid ester waxes, erucic acid amide waxes, behenic acid amide waxes, carnauba waxes, oxidized or grafted polyolefin waxes, or the Mg, Ca, Zn, Al or ZrO salts of stearic acid, arachic acid, behenic acid, erucic acid, dodecylsulfuric acid or coconut alkylsulfonic acid.

10. A process for the preparation of a hydrophobic salt of a layer-like metal hydroxide as claimed in one or more of claims 1 to 9, **characterized in that** one or more hydrophobic compounds from the group consisting of waxes and metal soaps are added in an amount of from 0.2 to 200, preferably 1 to 200 wt.%, based on the metal hydroxide salt, to a layer-like metal hydroxide salt, which contains trivalent, divalent and optionally monovalent metal cations and one or more organic anions A of the formula (I) as claimed in claim 1, in aqueous, aqueous-organic or organic dispersion, with intensive thorough mixing, and optionally the liquid medium is removed, the product is dried and isolated as a powder.

11. A process for the preparation of a hydrophobic salt of a layer-like metal hydroxide as claimed in one or more of claims 1 to 9, **characterized in that** a layer-like metal hydroxide, which contains trivalent, divalent and optionally monovalent metal cations, is reacted in the presence of from 0.2 to 200, preferably 1 to 200 wt.%, based on the metal hydroxide salt, of one or more hydrophobic compounds from the group consisting of waxes and metal soaps in aqueous, aqueous-organic or organic dispersion, with intensive thorough mixing, with one or more organic anions A of the formula (I) as claimed in claim 1, and optionally the liquid medium is removed and the product is dried and isolated as a powder.

12. The process as claimed in claim 10 or 11, **characterized in that** the metal soap is produced by precipitation in the aqueous, aqueous-organic or organic dispersion.

13. The process as claimed in claim 11 or 12, **characterized in that** the hydrophobic compound is added as a solution or aqueous dispersion at a temperature of between 20 and 200 °C.

14. The use of a hydrophobic salt of a layer-like metal hydroxide as claimed in one or more of claims 1 to 9 as a charge controlling agent in electrophotographic toners and developers, powder coatings, electret materials, electronic inks, electronic papers and in electrostatic separation operations.

15. The use of a hydrophobic salt of a layer-like metal hydroxide as claimed in one or more of claims 1 to 9 as an external additive in electrophotographic toners and developers for controlling the flowability and the charge of powder toners, and as an anti-offset agent.

## Revendications

1. Sel hydrophobe d'un hydroxyde métallique lamellaire, qui peut être obtenu en ajoutant à un sel d'hydroxyde métallique lamellaire, qui contient des cations métalliques trivalents, divalents et éventuellement monovalents, et un ou plusieurs anions organiques A de formule (I)
X-R-Y (I),
dans laquelle
X représente un hydrogène, hydroxy, carboxy, sulfato ou sulfo ;
Y représente un carboxy, sulfato ou sulfo, et
R représente un reste aliphatique, cycloaliphatique, hétérocycloaliphatique, oléfinique, cyclooléfinique, hétérocyclooléfinique, aromatique, hétéroaromatique, araliphatique ou hétéro-araliphatique avec 2 à 50 atomes de carbone, qui peut contenir un ou plusieurs substituants du groupe hydroxy, amino, halogène, alkyle en C₁ à C₂₂, alcoxy en C₁ à C₂₂, (alkylène en C₁ à C₂₂) - (CO) -O- (CH₂CH₂O)₀₋₅₀-alkyle, (alkylène en C₁ à C₂₂)-(CO)-O-(CH₂CH₂O)₀₋₅₀-halogénoalkyle, carboxy, sulfo, nitro ou cyano,
en dispersion sous mélange intensif un ou plusieurs composés hydrophobes du groupe des cires et des savons métalliques, en une quantité de 0,2 à 200 % en poids, par rapport au sel d'hydroxyde métallique, et en éliminant éventuellement le milieu liquide, en séchant et en isolant sous forme de poudre,
dans lequel
le savon métallique est un composé du groupe des sels métalliques di-, tri- ou quadrivalents d'acides carboxyliques en C₇ à C₄₃ saturés ou insaturés, de sulfonates en C₈ à C₄₄, de sulfates en C₈ à C₄₄, de phosphates en C₈ à C₄₄, de cires d'acides, de cires d'acides partiellement estérifiées, de cires d'esters partiellement hydrolysés et de cires de PE oxydées, ou un composé du groupe des sels métalliques divalents, trivalents ou quadrivalents d'éthersulfates d'alkyle en C₈ à C₄₄, des amidoéthersulfates d'alkyle en C₈ à C₄₄, des sulfonates d'aralkyle en C₈ à C₄₄ (dans lesquels aryle est en C₆ à C₁₂ et alkyle est en C₁ à C₃₂), des éthersulfosuccinates d'alkyle en C₈ à C₄₄, des N-alkyle en C₈ à C₄₄-sulfo-succinamates, des glutamates d'acyle en C₈ à C₄₄, eiséthionates d'acide gras en C₈ à C₄₄, méthyltaurides d'acide gras en C₈ à C₄₄, sarcosides d'acide gras en C₈ à C₄₄.

2. Sel hydrophobe selon la revendication 1, **caractérisé en ce que** l'on ajoute un ou plusieurs composés hydrophobes du groupe des cires et des savons métalliques en une quantité de 1 à 200 % en poids, par rapport au sel d'hydroxyde métallique.

3. Sel hydrophobe d'un hydroxyde métallique lamellaire selon la revendication 1 ou 2, **caractérisé en ce que** l'hydroxyde métallique est un hydroxyde multiple, dans lequel le rapport molaire des cations métalliques divalents aux cations métalliques trivalents se situe entre 1000 et 0,001.

4. Sel hydrophobe d'un hydroxyde métallique lamellaire selon une ou plusieurs des revendications 1 à 3, **caractérisé en ce que** les cations métalliques divalents sont Mg²⁺, Ca²⁺, Sr²⁺, Ba²⁺, Zn²⁺, Co²⁺, Ni²⁺, Fe²⁺, Cu²⁺ ou Mn²⁺.

5. Sel hydrophobe d'un hydroxyde métallique lamellaire selon au moins une des revendications 1 à 3, **caractérisé en ce que** les cations métalliques trivalents sont Al³⁺, Fe³⁺, Co³⁺, Mn³⁺, Cr³⁺, Sc³⁺ ou B³⁺.

6. Sel hydrophobe d'un hydroxyde métallique lamellaire selon au moins une des revendications 1 à 5, **caractérisé en ce que** l'anion organique A est l'acide benzilique, l'acide salicylique, l'acide benzoïque, un acide naphtalènedisulfonique, un acide naphtalène-dicarboxylique, un acide hydroxynaphtoïque, l'acide lactique, l'acide stéarique, l'acide arachidique, l'acide béhénique, l'acide érucique, l'acide octane-dicarboxylique, l'acide décanedicarboxylique (acide sébacique), l'acide dodécanedicarboxylique, l'acide tétradécanedicarboxylique, l'acide hexadécane-dicarboxylique, l'acide octadécanedicarboxylique, l'acide naphtalènetétracarboxylique, le monoester alkylique en C₆ à C₂₀ de l'acide sulfosuccinique ou le monoester fluoroalkylique en C₆ à C₂₂ de l'acide sulfosuccinique.

7. Sel hydrophobe d'un hydroxyde métallique lamellaire selon au moins l'une des revendications 1 à 6, **caractérisé en ce que** la cire est un composé du groupe des cires d'acide, cires d'ester, cires d'amide, cires de carnauba, cires de polyoléfine, cires de décomposition de polyoléfine, cires de PE ou PP oxydé, cires de PP modifiées par greffage avec des monomères, cires de polyoléfine-métallocène et cires de paraffine ou un mélange d'entre elles.

8. Sel hydrophobe d'un hydroxyde métallique lamellaire selon au moins l'une des revendications 1 à 7, qui est un sel d'hydroxyde double de Mg-Al avec un rapport molaire Mg:Al de 1000:1 à 1:1000 ; avec 0,1 à 30 % en poids d'acide sébacique et/ou 0,1 à 75 % en poids d'acide stéarique comme anion organique ; et avec 1 à 150 % en poids, respectivement par rapport au poids du sel d'hydroxyde double de Mg-Al, de cire de lignite, de cire de lignite partiellement estérifiée, de cire d'ester d'acide hydroxystéarique, de cire d'amide d'acide érucique, de cire d'amide d'acide béhénique, de cire de carnauba, de cire d'ester d'acide montanique, de cire d'ester d'acide montanique partiellement hydrolysée, de cire de polyoléfine oxydée ou rendue polaire par greffage, ou de sel de Zn, Pb, Sn, TiO, ZrO, Mg, Ca, Sr, Ba ou Al d'acides carboxyliques en C₇ à C₄₃ saturés ou insaturés, de sulfonates en C₈ à C₄₄, de sulfates en C₈ à C₄₄, de phosphates en C₈ à C₄₄, de cires d'acides, de cires d'acides partiellement estérifiées, de cires d'acides partiellement hydrolysées ou de cires de PE oxydées comme composé hydrophobe.

9. Sel hydrophobe d'un hydroxyde métallique lamellaire selon au moins l'une des revendications 1 à 8, qui est un carbonate-hydroxyde double de magnésium-aluminium avec 0,1 à 4 % en poids de carbonate, avec un rapport molaire de Mg:Al de 5:1 à 1:5, avec 0,1 à 20 % en poids de mono- ou di-anions de l'acide sébacique et/ou 0,1 à 50 % en poids d'acide stéarique ; et avec 2 à 100 % en poids, respectivement par rapport au poids du carbonate-hydroxyde double de Mg-Al, d'une ou de plusieurs cires du groupe des cires de lignite, des cires d'ester d'acide montanique, des cires d'ester d'acide montanique partiellement hydrolysées, des cires d'ester d'acide hydroxystéarique, des cires d'amide d'acide érucique, des cires d'amide d'acide béhénique, des cires de carnauba, des cires de polyoléfine oxydées ou greffées, ou des sels de Mg, Ca, Zn, Al ou ZrO de l'acide stéarique, l'acide arachidique, l'acide béhénique, l'acide érucique, l'acide dodécylsulfurique ou l'acide alkylsulfonique de coco.

10. Procédé de préparation d'un sel hydrophobe d'un hydroxyde métallique lamellaire selon une ou plusieurs des revendications 1 à 9, **caractérisé en ce que** l'on ajoute à un sel hydrophobe d'un hydroxyde métallique lamellaire, qui contient des cations métalliques trivalents, divalents et éventuellement monovalents et un ou plusieurs anions organiques A de formule (I) selon la revendication 1, dans une dispersion aqueuse, aqueuse-organique ou organique, sous mélange intensif, un ou plusieurs composés hydrophobes du groupe des cires et des savons métalliques, en une quantité de 0,2 à 200, de préférence 1 à 200 % en poids, par rapport au sel d'hydroxyde métallique, et éventuellement on élimine le milieu liquide, on sèche et on isole sous forme de poudre.

11. Procédé de préparation d'un sel hydrophobe d'un hydroxyde métallique lamellaire selon une ou plusieurs des revendications 1 à 9, **caractérisé en ce que** l'on met à réagir un hydroxyde métallique lamellaire, qui contient des cations métalliques trivalents, divalents et éventuellement monovalents, en présence de 0,2 à 200, de préférence 1 à 200 % en poids, par rapport au sel d'hydroxyde métallique, d'un ou plusieurs composés hydrophobes du groupe des cires et des savons métalliques, dans une dispersion aqueuse, aqueuse-organique ou organique, sous mélange intensif avec un ou plusieurs anions organiques A de formule (I) selon la revendication 1, et éventuellement on élimine le milieu liquide, on sèche et on isole sous forme de poudre.

12. Procédé selon la revendication 10 ou 11, **caractérisé en ce que** l'on produit le savon métallique dans la dispersion aqueuse, aqueuse-organique ou organique par précipitation.

13. Procédé selon la revendication 11 ou 12, **caractérisé en ce que** l'on ajoute le composé hydrophobe sous la forme d'une solution ou d'une dispersion aqueuse à une température entre 20 et 200 °C.

14. Utilisation d'un sel hydrophobe d'un hydroxyde métallique lamellaire selon une ou plusieurs des revendications 1 à 9 comme agent de régulation de la charge dans des toners et révélateurs électrophotographiques, des peintures en poudre, des matériaux d'électrets, des encres électroniques, des journaux électroniques et dans des processus électrostatiques de séparation.

15. Utilisation d'un sel hydrophobe d'un hydroxyde métallique lamellaire selon une ou plusieurs des revendications 1 à 9 comme additif externe dans des toners et révélateurs électrophotographiques pour la régulation de l'aptitude à l'écoulement et de la charge de toners en poudre, ainsi que comme agent anti-maculage (anti-offset).
